# EUROPEAN PATENT APPLICATION

(11) **EP 4 600 282 A1**
(43) Date of publication of application: **13.08.2025**
(21) Application number: 23874990.7
(22) Date of filing: 21.04.2023
(51) Int. Cl.: C08F 259/08, C08F 214/26, C08F 220/06, C08F 220/14, C08F 220/18, C08F 2/30, H01M 4/62

(54) **CORE-SHELL TYPE FLUORORESIN PARTICLES WITH IMPROVED BINDING PROPERTIES**

(30) Priority: 07.10.2022 KR 20220128606
(71) Applicant: LX MMA CORP., Yeosu-si, Jeollanam-do 59613 (KR)
(72) Inventor: JEON, Seong Jang, Daejeon 34122 (KR); KIM, Bub Sung, Daejeon 34122 (KR); KANG, Da Hyun, Daejeon 34122 (KR); PARK, Sung Il, Daejeon 34122 (KR)
(74) Representative: Mathys & Squire
(86) International application number: PCT/KR2023/005472
(87) International publication number: WO 2024/075917

(57) **Abstract**

The present invention relates to core-shell particles (or a core-shell particle-type binder), a composition comprising the core-shell particles (or the core-shell particle-type binder), or an electrode manufactured from the composition, the core-shell particles having a perfluorinated resin core, which comprises a perfluorinated polymer, and a resin shell layer, which comprises an acrylic polymer, wherein the core-shell particles are prepared by emulsion-polymerizing an acrylic monomer to the perfluorinated resin core by using, as an emulsifier, a polyethylene glycol ether having an alkyl group of C₈ or greater, which is substituted with at least one alkyl of chemical formula **1,** and the acrylic monomer comprises (a) methyl methacrylate (MMA), (b) methacrylic acid (MAA) or acrylic acid (AA), and (c) a C₂-C₆ alkyl (meth)acrylate.

## Description

### [Technical Field]

The following disclosure relates to core-shell particles (or a core-shell particulate binder) having a perfluorinated resin core including a perfluoropolymer and a resin shell layer including an acryl-based polymer, a composition including the core-shell particles, or an electrode manufactured from the composition.

When the core-shell particles (or core-shell particulate binder) according to an exemplary embodiment of the present invention are used as a binder of an electrode active material, even in the case of using a small amount of the perfluorinated resin core and using a low content of the core-shell particles, a binder which imparts a binding force or adhesive strength between the electrode active materials may be sufficiently provided.

In addition, the core-shell particles according to an exemplary embodiment of the present disclosure may have a very uniform particle size distribution, have a shell layer which is very uniformly formed, and provide an excellent binding effect.

### [Background Art]

A perfluorinated resin including polytetrafluoroethylene (PTFE) may be used as various adhesives, a process improvement agent, a fluidizer, and the like, due to its electrical properties, thermal properties, and binding properties.

For example, the perfluorinated resin may be used with other materials as a coating material of a semiconductor manufacturing device or the like, a coating material on various substrates in an electric storage device or the like, an adhesive material, or the like. In addition, research to form a shell layer with a resin having different physical properties on the surface of the particles or with surface modification and improve the properties as the use is being conducted for performance improvement.

That is, a technology of manufacturing core-shell particles having a surface layer of the perfluorinated resin as a non-fluorinated resin as a shell layer was developed in order to improve surface properties while using the properties of the perfluorinated resin as they are.

Japanese Patent Laid-Open Publication No. 2019-112620 A discloses core-shell particles having a core including a perfluoropolymer and a shell including a non-fluorinated resin in order to provide core-shell particles having excellent dispersibility, but still particles in which the shell layer does not completely surround the core may be formed, and also, sufficient adhesive strength is not shown, and thus, the particles do not have enough performance to be used as a binder of an electrode active material.

### [Disclosure]

### [Technical Problem]

An object of the present disclosure is to provide novel core-shell particles (or core-shell particulate binder) having a perfluorinated resin core having further improved adhesive strength to an electrode active material and the like, and a resin shell layer including an acryl-based polymer, as compared with a conventional perfluorinated resin and core-shell particles or a core-shell particulate binder including the resin.

### [Technical Solution]

In one general aspect, core-shell particles include: a perfluorinated resin core including a perfluoropolymer and a resin shell layer including an acryl-based polymer, wherein the core-shell particles are manufactured by emulsion polymerization of an acryl-based monomer to the perfluorinated resin core, using polyethylene glycol ether having a C₈ or higher alkyl group substituted by one or more alkyls of the following Chemical Formula 1 as an emulsifier, and the acryl-based monomer includes: (a) methyl methacrylate; (b) methacrylic acid or acrylic acid; and (c) C₂ to C₆ alkyl (meth)acrylate:

[Chemical Formula 1] R-(-O-C₂H₄-)ₙ-OH

wherein R is a C₈ or higher alkyl group substituted by one or more alkyls, and n is an integer of 5 to 15.

In an exemplary embodiment, Chemical Formula 1 may be an emulsifier of the following Chemical Formula 2:

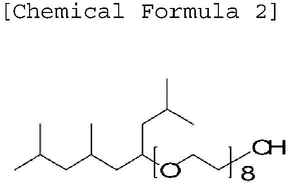

In an exemplary embodiment, the perfluoropolymer may be polytetrafluoroethylene.

In an exemplary embodiment, the core-shell particles may include the perfluoropolymer and the acryl-based polymer at a weight ratio of 98:2 to 30:70.

In an exemplary embodiment, the core-shell particles may include the perfluoropolymer and the acryl-based polymer at a weight ratio of 80:20 to 40:60.

In an exemplary embodiment, the core-shell particles may include 20 to 40 wt% of the methyl methacrylate in the acryl-based monomer.

In an exemplary embodiment, the core-shell particles may include 30 to 50 wt% of the methacrylic acid or the acrylic acid in the acryl-based monomer.

In an exemplary embodiment, the core-shell particles may include 20 to 40 wt% of C₂ to C₆ alkyl (meth)acrylate in the acryl-based monomer.

In another general aspect, a composition includes the core-shell particles and an electrode active material.

In another general aspect, an electrode manufactured from the composition is provided.

In still another general aspect, a battery includes the core-shell particles as a binder.

### [Advantageous Effects]

The core-shell particles according to an exemplary embodiment of the present disclosure show excellent binding properties to other materials, and may provide excellent physical adhesive properties, electrical properties, and surface properties even with the use of a small amount of a perfluorinated polymer such as polytetrafluoroethylene (PTFE). In addition, excellent adhesive performance may be shown even with a small content of the core-shell particulate binder.

The core-shell particles according to an exemplary embodiment of the present disclosure may provide a core-shell particulate binder which has a uniform particle size distribution and a very uniformly formed shell layer, and also, a novel binder having excellent adhesive strength for adhering particulate particles such as an electrode active material may be provided.

That is, the core-shell particles (or core-shell particulate binder) according to an exemplary embodiment of the present disclosure have excellent binding properties to other materials such as metal or conductive particles and has an effect of providing core-shell particles (or a core-shell particulate binder) which have excellent adhesive properties even with the use of a small amount of a perfluorinated resin core and a small amount of a core-shell particulate binder.

In addition, the core-shell particles according to an exemplary embodiment of the present disclosure are manufactured by emulsion polymerization of an acryl-based monomer, using polyethylene glycol ether having a C₈ or higher alkyl group substituted by one or more alkyls of the following Chemical Formula 1 as an emulsifier, thereby forming a uniform particle size and a uniform shell layer so that a core of a fluorine resin and the like is not exposed to the surface of the particles:

[Chemical Formula **1]** R-(-O-C₂H₄-)ₙ-OH

wherein R is a C₈ or higher alkyl group substituted by one or more alkyls, and n is an integer of 5 to 15.

The monomer forming the shell layer in the core-shell particles is an acryl-based monomer, and the acryl-based monomer includes (a) methyl methacrylate (MMA); (b) methacrylic acid (MAA) or acrylic acid (AA); and (c) C₂ to C₆ alkyl (meth)acrylate.

In addition, since the core-shell particles and the core-shell particulate binder according to an exemplary embodiment of the present disclosure have an excellent affinity with other materials such as an electrode active material, they may have an effect of sufficiently showing excellent binding properties of the conventional fluorine resin, even when the content of the perfluoropolymer (PTFE) forming the perfluorinated resin core is very small, and also, they may impart binding properties of an excellent electrode active material even at a small content of the core-shell particulate binder.

In addition, by having the shell layer prepared by polymerizing the acryl-based monomer even with a small content of the fluorine resin, the core-shell particles according to an exemplary embodiment of the present disclosure have increased binding strength to a metal current collector such as an Al foil used as a current collector as well as the material such as the electrode active material, thereby having an effect of further strengthening the physical properties of an electrode.

### [Description of Drawings]

FIG. 1 is a photograph of electrode dough prepared according to Example **1.**
FIG. 2 is a particle shape analysis (FE-SEM) photograph of an electrode manufactured according to Example **1.**

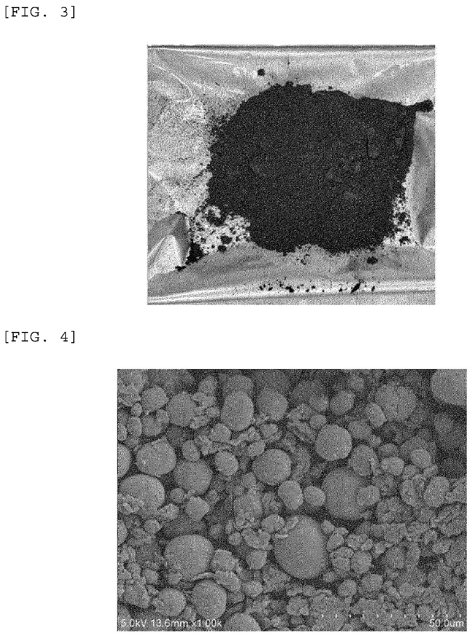

FIG. 3 is a photograph of electrode dough prepared according to Comparative Example **1.**
FIG. 4 is a particle shape analysis (FE-SEM) photograph of an electrode manufactured according to Comparative Example 1.

### [Best Model

Hereinafter, core-shell particles (or a core-shell particulate binder) having a perfluorinated resin core including a perfluoropolymer and a resin shell layer including an acryl-based polymer, a composition including the core-shell particles, or an electrode manufactured from the composition will be described.

Technical terms and scientific terms used in the present specification have the general meaning understood by those skilled in the art to which the present invention pertains unless otherwise defined, and a description for the known function and configuration obscuring the present invention will be omitted in the following description.

In addition, the singular form used in the present disclosure may be intended to also include a plural form, unless otherwise indicated in the context.

In addition, units used in the present disclosure without particular mention are based on weights, and as an example, a unit of % or ratio refers to a wt% or a weight ratio, and wt% refers to wt% of any one component in a total composition, unless otherwise defined.

In addition, the numerical range used in the present disclosure includes all values within the range including the lower limit and the upper limit, increments logically derived in a form and span of a defined range, all double limited values, and all possible combinations of the upper limit and the lower limit in the numerical range defined in different forms. Unless otherwise defined in the specification of the present invention, values which may be outside a numerical range due to experimental error or rounding off of a value are also included in the defined numerical range.

The term "comprise" in the present disclosure is an open-ended description having a meaning equivalent to the term such as "is/are provided", "contain", "have", or "is/are characterized, and does not exclude elements, materials, or processes which are not further listed.

The term "(meth)acrylate" of the present disclosure may refer to methacrylate or acrylate at the same time.

Hereinafter, core-shell particles (or a core-shell particulate binder) having a perfluorinated resin core including a perfluoropolymer and a resin shell layer including an acryl-based polymer according to an exemplary embodiment of the present disclosure, a composition including the core-shell particles, or an electrode manufactured from the composition will be described.

The present disclosure relates to core-shell particles (or a core-shell particulate binder) having a perfluorinated resin core including a perfluoropolymer and a resin shell layer including an acryl-based polymer, wherein the core-shell particles (or core-shell particulate binder) are manufactured by emulsion polymerization of an acryl-based monomer to the perfluorinated resin core, using polyethylene glycol ether having a C₈ or higher alkyl group substituted by one or more alkyls of the following Chemical Formula 1 as an emulsifier.

In an exemplary embodiment, the acryl-based monomer includes (a) methyl methacrylate (MMA); (b) methacrylic acid (MAA) or acrylic acid (AA); and (c) C₂ to C₆ alkyl (meth)acrylate:

[Chemical Formula 1] R-(-O-C₂H₄-)ₙ-OH

wherein R is a C₈ or higher alkyl group substituted by one or more alkyls, and n is an integer of 5 to 15.

In an exemplary embodiment according to the present disclosure, Chemical Formula 1 may be the emulsifier of the following Chemical Formula 2, but is not limited thereto:

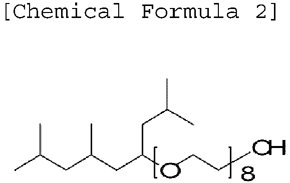

In an exemplary embodiment, the emulsifier may be polyethylene glycol trimethylnonyl ether in which an ethylene glycol repeating unit showing hydrophilicity has a molecular weight of 384 g/mol, but is not limited thereto.

In an exemplary embodiment, the core-shell particles (or core-shell particulate binder) may provide an excellent particle shape from which core-shell particles (or a core-shell particulate binder) having a shell layer evenly surrounding the entire area of the core may be obtained.

In an exemplary embodiment, a monomer forming the perfluorinated resin core is not particularly limited as long as it is a perfluorinated unsaturated monomer, but, for example, may be at least one selected from a polymer prepared from a monomer selected from tetrafluoroethylene (TFE), perfluoro(alkyl vinyl ether), hexafluoropropylene, and the like, or a copolymer thereof, but is not limited thereto.

In an exemplary embodiment, an example of the perfluorinated polymer forming the perfluorinated resin core may be at least one selected from the group consisting of polytetrafluoroethylene (PTFE), tetrafluoroethylene (TFE)/ perfluoro(alkylvinylether) copolymer (PFA), and TFE/hexafluoropropylene copolymer (FEP), but is not limited thereto.

In an exemplary embodiment, the perfluoropolymer may be polytetrafluoroethylene, but is not limited thereto.

In an exemplary embodiment, the resin forming the resin shell layer may be a polyalkyl (meth) acrylate-based resin, but is not limited thereto.

In an exemplary embodiment, when the core-shell particles (or core-shell particulate binder) are manufactured by polymerization, they may be manufactured by a conventional known method such as by a method of properly mixing the perfluorinated resin core and an additive such as a polymerization initiator and performing emulsion polymerization, solution polymerization, or suspension polymerization, but are not limited thereto.

In an exemplary embodiment, the core-shell particles (or core-shell particulate binder) may include the perfluoropolymer and the acryl-based polymer at a weight ratio of 98:2 to 30:70, 95:5 to 30:70, 95:5 to 40:60, 95:5 to 50:50, 95:5 to 60:40, 95:5 to 70:30, 95:5 to 80:20, 90:10 to 30:70, 90:10 to 40:60, 90:10 to 50:50, 90:10 to 60:40, 90:10 to 70:30, 90:10 to 80:20, 80:20 to 30:70, 80:20 to 40:60, 80:20 to 50:50, 80:20 to 60:40, 80:20 to 70:30, 70:30 to 30:70, 70:30 to 40:60, 70:30 to 50:50, or 70:30 to 60:40. Specifically, the core-shell particles may include the perfluoropolymer and the acryl-based polymer at a weight ratio of 98:2 to 30:70. Specifically, the core-shell particles may include the perfluoropolymer and the acryl-based polymer at a weight ratio of 80:20 to 40:60. The core-shell particles of the present disclosure have an excellent affinity with an active material and has an excellent effect of showing excellent binding properties to an electrode active material even when the ratio of the perfluorinated resin core, for example, the perfluoropolymer (PTFE) is low.

In an exemplary embodiment, the acryl-based monomer may include at least one selected from the group consisting of butyl methacrylate, 2-ethylhexyl methacrylate, hydroxyethyl methacrylate, glycidyl methacrylate, hydroxypropyl methacrylate, hydroxybutyl methacrylate, methyl methacrylate, acrylic acid, methacrylic acid, ethyl acrylate, propyl acrylate, butyl acrylate, pentyl acrylate, and hexyl acrylate, but is not limited thereto. Specifically, the acryl-based monomer may include: (a) methyl methacrylate (MMA); (b) methacrylic acid (MAA) or acrylic acid (AA); and (c) C₂ to C₆ alkyl (meth)acrylate. More specifically, the acryl-based monomer may include: (a) methyl methacrylate (MMA); (b) methacrylic acid (MAA); and (c) butyl acrylate.

The core-shell particles (or core-shell particulate binder) of the present disclosure include: (a) methyl methacrylate (MMA), (b) methacrylic acid (MAA) or acrylic acid (AA), and (c) C₂ to C₆ alkyl (meth)acrylate as the acryl-based monomer, thereby achieving excellent binding performance when used as a binder.

In an exemplary embodiment, the core-shell particles (or core-shell particulate binder) may include 10 wt% or more, 20 wt% or more, or 30 wt% or more of the methyl methacrylate in the acryl-based monomer. The methyl methacrylate may be included at 60 wt% or less, 50 wt% or less, or 40 wt% or less in the acryl-based monomer.

In an exemplary embodiment, the core-shell particles (or core-shell particulate binder) may include 10 to 60 wt%, 20 to 50 wt%, 20 to 40 wt%, or 30 to 40 wt% of the methyl methacrylate in the acryl-based monomer. Specifically, the methyl methacrylate may be included at 20 to 40 wt% in the acryl-based monomer.

In an exemplary embodiment, the core-shell particles (or core-shell particulate binder) may include 10 wt% or more, 20 wt% or more, or 30 wt% or more of the methacrylic acid or the acrylic acid in the acryl-based monomer. The core-shell particles (or core-shell particulate binder) may include 60 wt% or less, 50 wt% or less, or 40 wt% or less of the methacrylic acid or the acrylic acid in the acryl-based monomer.

In an exemplary embodiment, the core-shell particles (or core-shell particulate binder) may include 10 to 60 wt%, 30 to 50 wt%, 20 to 50 wt%, 20 to 40 wt%, or 30 to 40 wt% of the methacrylic acid or the acrylic acid in the acryl-based monomer. Specifically, the core-shell particles (or core-shell particulate binder) may include 30 to 50 wt% of the methacrylic acid or the acrylic acid in the acryl-based monomer.

In an exemplary embodiment, the core-shell particles (or core-shell particulate binder) may include 10 wt% or more, 20 wt% or more, or 30 wt% or more of the C₂ to C₆ alkyl (meth)acrylate in the acryl-based monomer. The core-shell particles (or core-shell particulate binder) may include 60 wt% or less, 50 wt% or less, or 40 wt% or less of the C₂ to C₆ alkyl (meth)acrylate in the acryl-based monomer.

In an exemplary embodiment, the core-shell particles (or core-shell particulate binder) may include 10 to 60 wt%, 30 to 50 wt%, 20 to 50 wt%, 20 to 40 wt%, or 30 to 40 wt% of the C₂ to C₆ alkyl (meth)acrylate in the acryl-based monomer. Specifically, the acryl-based monomer may include 20 to 40 wt% of the C₂ to C₆ alkyl (meth)acrylate.

In addition, the present disclosure relates to a core-shell particle (or a core-shell particulate binder) slurry having a perfluorinated resin core including a perfluoropolymer and a resin shell layer including an acryl-based polymer, wherein the core-shell particles (or core-shell particulate binder) are manufactured by emulsion polymerization of an acryl-based monomer to the perfluorinated resin core, using polyethylene glycol ether having a C₈ or higher alkyl group substituted by one or more alkyls of the following Chemical Formula 1 as an emulsifier, and the acryl-based monomer includes: (a) methyl methacrylate (MMA); (b) methacrylic acid (MAA) or acrylic acid (AA); and (c) C₂ to C₆ alkyl (meth)acrylate:

[Chemical Formula 1] R-(-O-C₂H₄-)ₙ-OH

wherein R is a C₈ or higher alkyl group substituted by one or more alkyls, and n is an integer of 5 to 15.

In addition, the present disclosure may provide a composition including the core-shell particles (or core-shell particulate binder).

In an exemplary embodiment, the composition may include an electrode active material. The composition including the core-shell particles of the present disclosure has an excellent affinity with the active material and may show excellent binding properties even with a small ratio of the perfluoropolymer (PTFE) included in the core-shell particles.

The present disclosure may provide a composition including the core-shell particles (or core-shell particulate binder) and an electrode active material.

In addition, the present disclosure may provide an electrode manufactured from the composition.

The present disclosure may provide a battery including the core-shell particles (or core-shell particulate binder) as a binder. When the particles are used as a binder during manufacture of a battery, the core-shell particles (or core-shell particulate binder) of the present disclosure show excellent binding properties to the electrode active material.

Hereinafter, the present invention will be described in more detail with reference to the examples and the comparative examples. However, the following examples and comparative examples are only an example for describing the present invention in more detail, and do not limit the present invention in any way. Unless otherwise stated in the invention, the unit of temperature is °C, and unless otherwise stated, the unit of an amount of a composition used is wt%.

### 1. Measurement of total solid content [g/mol]

15 g of latex after polymerization was weighed on an aluminum dish and dried in an oven at 80°C for 24 hours, and then the weight after drying was measured. A total solid content was calculated by (weight after drying - dish weight) / initial weight × 100.

### 2. Extraction method of non-fluorinated resin

100 g of latex after polymerization was placed in a 250 ml of a centrifuge tube and centrifugation was performed at 9,000 rpm for 30 minutes. The separated supernatant was discarded, 100 g of acetone was added to the remaining solid, and shaking was performed with a shaker for 3 hours so that a non-fluorinated resin was extracted with acetone. After the shaking for 3 hours, centrifugation was performed again at 9,000 rpm for 30 minutes, and the fluorinated resin was aggregated at the bottom and an acetone supernatant in which the non-fluorinated resin was dissolved was separated. The separated supernatant in which the non-fluorinated resin was dissolved was added dropwise to 400 g of methanol to obtain the precipitated non-fluorinated resin. The precipitated non-fluorinated resin was separated using a reduced pressure filter, washed 3 times with methanol, placed in a separate beaker, and dried in an oven at 80°C for 24 hours.

### 3. Weight average molecular weight (Mw) [g/mol]

In order to measure the molecular weight of the non-fluorinated resin of the latex prepared in the examples and the comparative examples, 10 mg of the extracted non-fluorinated resin was dissolved in 10 ml of tetrahydrofuran (THF), respectively, and filtered using a 0.2 µm teflon filter, and the molecular weight was measured using gel permeation chromatography (GPC) available from Waters.

### 4. Glass transition temperature (Tg) [°C]

The measurement was performed on the non-fluorinated resin extracted from the latex prepared in the examples and the comparative examples over 2 cycles under the heating conditions of 10°C per minute using a differential scanning calorimetry (TA, Q20 DSC), and then the glass transition temperature was calculated by a half Cp method with an inflection point of the second cycle.

### 5. Measurement of ratio between fluorinated resin and non-fluorinated resin

15 g of the latex after polymerization was placed on an aluminum dish and dried in an oven at 80°C. 10 mg of the dried powder was heated to 600°C at 10°C per minute through TGA and a decreased weight was measured. A ratio between the fluorinated resin and the non-fluorinated resin was measured from a degree of weight decrease using the properties of the thermally decomposed non-fluorinated resin.

### 6. Measurement of particle size

1 or 2 drops of the latex after polymerization were diluted at 1,000 times and the size and the distribution of the particles were measured using NICOMP 380 (Entegris, dynamic light scattering).

### 7. Particle shape analysis and element analysis (FE-SEM/EDS)

1 or 2 drops of latex after polymerization were diluted with and dispersed in 20 ml of water, and 1 or 2 drops of the diluted solution were dropped onto a silicon wafer. The silicon wafer having a sample thereon was dried at room temperature under vacuum for 2 to 3 hours and then was coated with platinum for 90 seconds using a sputter. The shape of the particles was checked at 30,000 to 10,000x 1280 resolution at an acceleration voltage of 5 kV and a current of 10 µA.

### 8. Analysis of particle structure (TEM/EDS)

One drop of the latex was dropped onto a grid for transmission electron microscope (TEM) after a plasma treatment, and dried at room temperature. The structure of the dried sample was analyzed at a TEM/EDS (FEI, TECNAI TF20) acceleration voltage of 200 kV.

### 9. Method of preparing electrode dough

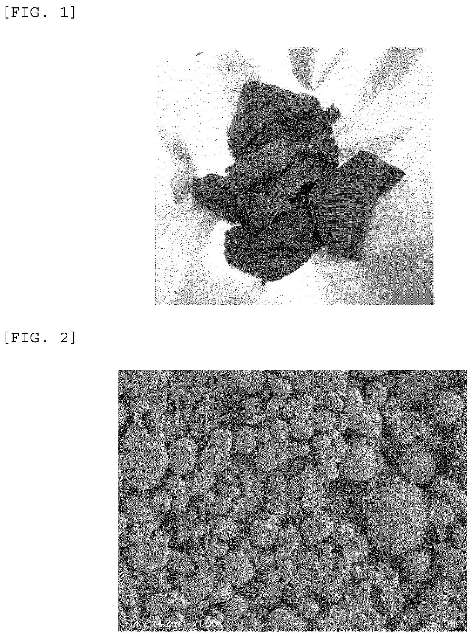

A total of 100 g of 96 g of NCM 622 (LG Chem), 2 g of ketjen black (EC-600JD available from Nouryon), and 2 g of a binder was added to a Henschel mixer, and mixed for 4 minutes. After the mixing, the composition was added to a HAAKE rheomixer (model name) and a shear force was applied so that binding was performed tightly by fibrosis, thereby obtaining electrode dough as shown in FIG. 1.

### 10. Binding strength sieving method

The dough prepared according to the method of preparing electrode dough was added to a sieving machine (Haver & Boecker) in which a cover, sieve 1 (pore size: 6.3 mm, wire diameter: 1.8 mm), sieve 2 (pore size: 4.75 mm, wire diameter: 1.6 mm), and a fan were laminated, and was sieved for 1 minute under the condition of an amplitude 1.wa The weights of the particles classified by sieving are shown in Table 2.

### [Example 1]

A PTFE aqueous dispersion having an average particle diameter of 0.21 µm, a solid content concentration of 30%, and a standard specific gravity (SSG) of 2.16 to 2.22 was prepared. Subsequently, 2448.0 g of a PTFE dispersion and 48.96 g of a polyethylene glycol triphenylnonyl ether 90% aqueous solution (TMN100X available from Dow) having a molecular weight of an ethylene glycol repeating unit showing hydrophilicity of mainly 384 g/mol were added to a 4 liter reactor, stirred at a speed of 350 rpm, and simultaneously heated to 75°C with nitrogen bubbling.

After the temperature reached 75°C as a polymerization temperature, nitrogen bubbling was stopped, and after 15 minutes, a monomer mixed solution formed of 36.72 g of methyl methacrylate (MMA), 91.8 g of methacrylic acid (MAA), 55.08 g of butyl acrylate (nBA), and 0.40 g of n-octyl mercaptan was added dropwise to the reactor over 15 minutes.

15 minutes after adding the monomer mixed solution, an aqueous solution of 68.4 g of distilled water and 0.18 g of an ammonium persulfate was added dropwise to the reactor over about 10 minutes. The polymerization reaction proceeded for 3 hours from the end of the addition of ammonium persulfate, and then cooling to 30°C was performed to obtain an emulsion.

The weight ratio of the emulsion is shown in Table 1.

In addition, according to 9. Method of preparing electrode dough and 10. Binding strength sieving method, electrode dough including an emulsion as a binder was prepared and binding strength was measured by the sieving method. The results thereof are shown in Table 2.

### [Example 2]

The process was performed in the same manner as in Example 1, except that the weights were changed to 73.44 g of methyl methacrylate (MMA), 55.08 g of methacrylic acid, 55.08 g of butyl acrylate (nBA), 0.29 g of n-octyl mercaptan, and 0.92 g of ammonium persulfate.

### [Example 3]

The process was performed in the same manner as in Example 1, except that the weights were changed to 1836.0 g of a PTFE dispersion, 36.72 g of a polyethylene glycol triphenylnonyl ether 90% aqueous solution (TMN100X available from Dow) having a molecular weight of an ethylene glycol repeating unit showing hydrophilicity of mainly 384 g/mol, 428.4 g of additional water, 73.44 g of methyl methacrylate (MMA), 183.6 g of methacrylic acid, 110.16 g of butyl acrylate (nBA), 0.81 g of n-octyl mercaptan, and 0.37 g of ammonium persulfate.

### [Example 4]

The process was performed in the same manner as in Example 3, except that the weights were changed to 146.88 g of methyl methacrylate (MMA), 110.16 g of methacrylic acid, 110.16 g of butyl acrylate (nBA), 0.59 g of n-octyl mercaptan, and 1.84 g of ammonium persulfate.

### [Example 5]

The process was performed in the same manner as in Example 1, except that the weights were changed to 1224.0 g of a PTFE dispersion, 24.48 g of a polyethylene glycol triphenylnonyl ether 90% aqueous solution (TMN100X available from Dow) having a molecular weight of an ethylene glycol repeating unit showing hydrophilicity of mainly 384 g/mol, 856.8 g of additional water, 110.16 g of methyl methacrylate (MMA), 275.40 g of methacrylic acid, 165.24 g of butyl acrylate (nBA), 1.21 g of n-octyl mercaptan, and 0.55 g of ammonium persulfate.

### [Example 6]

The process was performed in the same manner as in Example 5, except that the weights were changed to 220.32 g of methyl methacrylate (MMA), 165.24 g of methacrylic acid, 165.24 g of butyl acrylate (nBA), 0.88 g of n-octyl mercaptan, and 2.75 g of ammonium persulfate.

### [Comparative Example 1]

The process was performed in the same manner as in Example 1, except that the weights were changed to 146.88 g of methyl methacrylate (MMA), 0 g of methacrylic acid, 36.72 g of butyl acrylate (nBA), 0.26 g of n-octyl mercaptan, and 0.92 g of ammonium persulfate.

### [Comparative Example 2]

The process was performed in the same manner as in Comparative Example 1, except that the weights were changed to 137.7 g of methyl methacrylate (MMA) and 45.9 g of methyl acrylate (MA) instead of butyl acrylate (nBA).

### [Comparative Example 3]

The process was performed in the same manner as in Example 3, except that the weights were changed to 293.76 g of methyl methacrylate (MMA), 0 g of methacrylic acid, 73.44 g of butyl acrylate (nBA), 0.51 g of n-octyl mercaptan, and 1.84 g of ammonium persulfate.

### [Comparative Example 4]

The process was performed in the same manner as in Comparative Example 3 except that the weights were changed to 275.4 g of methyl methacrylate (MMA) and 91.80 g of methyl acrylate (MA) instead of butyl acrylate (nBA).

### [Comparative Example 5]

The process was performed in the same manner as in Example 5, except that the weights were changed to 440.64 g of methyl methacrylate (MMA), 0 g of methacrylic acid, 110.16 g of butyl acrylate (nBA), 0.77 g of n-octyl mercaptan, and 2.75 g of ammonium persulfate.

### [Comparative Example 6]

The process was performed in the same manner as in Comparative Example 5 except that the weights were changed to **413.1** g of methyl methacrylate (MMA) and 137.7 g of methyl acrylate (MA) instead of butyl acrylate (nBA).

**[Table 1]**

| | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| PTFE content | | 80 | 80 | 60 | 60 | 40 | 40 | 80 | 80 | 60 | 60 | 40 | 40 |
| (wt%) | | | | | | | | | | | | | |
| Shell ratio (wt%) | | 20 | 20 | 40 | 40 | 60 | 60 | 20 | 20 | 40 | 40 | 60 | 60 |
| Sthell composition (weight ratio, %) | MMA | 20 | 40 | 20 | 40 | 20 | 40 | 80 | 75 | 80 | 75 | 80 | 75 |
| | MAA | 50 | 30 | 50 | 30 | 50 | 30 | - | - | - | - | - | - |
| | BA | 30 | 30 | 30 | 30 | 30 | 30 | 20 | - | 20 | - | 20 | - |
| | MA | - | - | - | - | | | - | 25 | - | 25 | - | 25 |
| Tg (°C) | | 84.5 | 105.4 | 84.7 | 107 | 85.0 | 108 | 81.1 | 93.4 | 80.7 | 95 | 80.4 | 96.1 |
| Molecular weight (kg/mol) | | 135 | 213 | 128 | 229 | 121 | 240 | 203 | 183 | 198 | 190 | 194 | 196 |

**[Table 2]**

| | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Sieve 1 (coarse particles, wt%) | 96 | 94.9 | 98.4 | 95.3 | 98.9 | 95.6 | 0.3 | 33.4 | 0.6 | 12.3 | 1.0 | 8.1 |
| Sieve 2 (medium particles, wt%) | 1.7 | 2 | 0.7 | 1.5 | 0.4 | 1.1 | 0 | 12.3 | 0.4 | 9.9 | 0.6 | 7.9 |
| Fan (fine particles, wt%) | 2.3 | 3.1 | 0.9 | 3.2 | 0.7 | 3.3 | 99.6 | 54.3 | 98.9 | 77.8 | 98.4 | 84.0 |

As seen from the analysis results, when the core-shell particles simultaneously including methyl methacrylate (MMA), methacrylic acid (MA), and butyl acrylate (nBA), as in Examples 1 and 2 of the present disclosure, were used as a binder, the wt% of the coarse particles measured in sieve 1 was as high as 90% or more, and it was confirmed that the binding strength of the particles to an electrode active material and the like was excellent as a binder.

In addition, as shown in Examples 3 to 6, even when the amount of PTFE used was small, the wt% of the coarse particles was maintained at 90% or more, and it was confirmed that excellent binding strength with an electrode active material and the like was maintained.

However, when methyl methacrylate and butyl acrylate were used in combination or methyl methacrylate and methyl acrylate were used in combination, as in Comparative Examples 1 to 6, the wt% of coarse particles was as low as 34% and the wt% of fine particles was as high as 50% or more, and it was confirmed that the particles had weak binding strength to an electrode active material and the like as a binder.

Hereinabove, the preferred exemplary embodiment of the present invention was described, however, various modifications and equivalent range may be used in the present invention, and it is apparent that the above examples may be properly modified and identically applied. Therefore, the above description does not limit the scope of the present invention which is defined by the claims which follow.

## Claims

1. Core-shell particles comprising: a perfluorinated resin core including a perfluoropolymer and a resin shell layer including an acryl-based polymer,
wherein the core-shell particles are manufactured by emulsion polymerization of an acryl-based monomer to the perfluorinated resin core, using polyethylene glycol ether having a C₈ or higher alkyl group substituted by one or more alkyls of the following Chemical Formula 1 as an emulsifier, and
the acryl-based monomer includes:
(a) methyl methacrylate;
(b) methacrylic acid or acrylic acid; and
(c) C₂ to C₆ alkyl (meth)acrylate:
[Chemical Formula 1] R- (-O-C₂H₄-)ₙ-OH
wherein R is a C₈ or higher alkyl group substituted by one or more alkyls, and n is an integer of 5 to 15.

2. The core-shell particles of claim 1, wherein Chemical Formula 1 is an emulsifier of the following Chemical Formula 2:

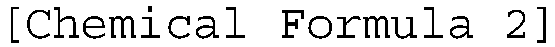

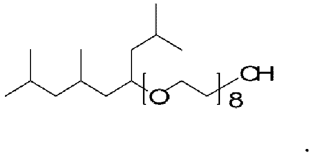

3. The core-shell particles of claim 1, wherein the perfluoropolymer is polytetrafluoroethylene.

4. The core-shell particles of claim 1, wherein the core-shell particles include the perfluoropolymer and the acryl-based polymer at a weight ratio of 98:2 to 30:70.

5. The core-shell particles of claim 4, wherein the core-shell particles include the perfluoropolymer and the acryl-based polymer at a weight ratio of 80:20 to 40:60.

6. The core-shell particles of claim 1, wherein the methyl methacrylate is included at 20 to 40 wt% in the acryl-based monomer.

7. The core-shell particles of claim 1, wherein the methacrylic acid or the acrylic acid is included at 30 to 50 wt% in the acryl-based monomer.

8. The core-shell particles of claim 1, wherein the C₂ to C₆ alkyl (meth)acrylate is included at 20 to 40 wt% in the acryl-based monomer.

9. A composition comprising the core-shell particles of claim 1 and an electrode active material.

10. An electrode manufactured from the composition of claim 9.

11. A battery comprising the core-shell particles of claim 1 as a binder.
